(19) **Europäisches Patentamt**

**European Patent Office**

**Office européen des brevets**

(11) **EP 1 188 565 B1**

(12) **EUROPEAN PATENT SPECIFICATION**

(45) Date of publication and mention
of the grant of the patent:
**23.11.2005 Bulletin 2005/47**

(51) Int Cl.$^7$: **B41J 2/165**

(21) Application number: **01119110.3**

(22) Date of filing: **08.08.2001**

(54) **Printing and compensating for image quality degradation**

Drucken und Kompensieren des Bildqualitätsverlustes

Imprimer et compenser la dégradation de la qualité de l'image

(84) Designated Contracting States:
**DE GB IT**

(30) Priority: **19.08.2000 US 642418**

(43) Date of publication of application:
**20.03.2002 Bulletin 2002/12**

(73) Proprietor: **Hewlett Packard Company,
a Delaware Corporation
Palo Alto, CA 94304 (US)**

(72) Inventors:
• **Cluet, Miquel
08013 Barcelona (ES)**

• **Ymbern, Marcelo
08029 Barcelona (ES)**
• **Subirada, Francesc
08190 Sant Cugat del Vallès, Barcelona (ES)**

(74) Representative: **Orsi, Alessandro et al
Hewlett Packard Espanola,
Legal Department
Avda.Graells, 501
08190 Sant Cugat del Vallès, Barcelona (ES)**

(56) References cited:
**EP-A- 0 540 243     EP-A- 0 625 847
EP-A- 0 978 390     US-A- 6 010 205**

EP 1 188 565 B1

**Description**

FIELD OF THE INVENTION

This invention relates to routine automatic calibration and recalibration of finished incremental-printer products, in the facilities of end-users. Such operation is to be distinguished from tests and measurements made in the course of research on or development of such printer products.

With this in mind, the invention relates generally to machines and procedures for incremental printing of text or graphics on printing media such as paper, transparency stock, or other glossy media; and more particularly to a scanning machine and method that construct text or images from individual spots created on a printing medium, in a two-dimensional pixel array. The invention prints and then optically senses representative images that exemplify image quality.

From the results the invention is able in some cases to optimize the image quality directly. In other cases the invention instead uses the results to identify weak or misdirected printing elements, and can exploit multipass printmode techniques to divert operation from those elements to others.

BACKGROUND OF THE INVENTION

In this section the following documents will be briefly discusses and identified by the name of the main inventor: EP Publ. no. 1010531 (Murcia), US Patent no. 5644343 (Allen), US Patent no. 5430306 (Ix), EP Publ. no. 983863 (Borrell), EP Publ. no. 863012 (Armijo), US patent no. 6062137 (Guo), US Patent no. 5796414 (Sievert), US Patent no. 5980016 (Nelson), EP Publ. no. 1130539 (Garcia-Reyero).

Incremental printers may produce many different kinds of undesired artifacts in the printed images. These mainly include:

- repeating two-dimensional patterns due to dither-mask periodicity, or periodic relationships between dither and print masks;

- progressively expanding or unfolding shapes arising in error diffusion; and

- simple banding due to imperfectly abutted swaths, or to printing elements (nozzles, in inkjet printing) that are defective, or progressively inoperative (e. g. clogged, in inkjet printing), or incorrectly aimed.

The present invention addresses the third category, but is not primarily directed to swath abutment. Thus the principal target of the invention is failure of printing elements, although in some cases this in turn can produce a particular form of swath-abutment failure - and when it does, the present invention can be effective.

(a) Sources of banding - In scanning incremental printers it is well known that striations along the scan axis are a pervasive problem. Early innovations attacked the production of white or light lines due to inadequately precise printing-medium-advance mechanisms, and anomalously colored lines when subtractive primary colorants were superposed in inconsistent sequence.

More recently, the development of very inexpensive techniques for fabrication of inkjet nozzle arrays exceeding two and three centimeters in length has also introduced difficulties in control of aiming at the ends of the arrays. While that problem has now been considerably mitigated, it still causes small but stubborn departures of printed swath height from printing-element-array height - and consequent banding.

With the improved control of end-element aiming, focus now shifts to elements along the entire length of the array (though this may include the end elements). Artifacts due to these elements, as compared with those addressed earlier at the array ends, are quantitatively much finer - but so are the demands of the marketplace.

The consumer calls for progressively finer image quality, coupled with economy. Consequently a very significant problem remains in relatively subtle banding due to intermediate printing elements that are clogged, weak (e. g. due to firing-component tolerances or fatigue) or, again, mispointed.

(b) Identification of weak printing elements - Some workers in this field (see e. g. the Murcia document and also U. S. 6,010,205 mentioned above) have concentrated upon tactics for correcting known bad nozzles, simply leaving identification of those elements to other artisans. Some workers have proposed to monitor the dot-generating mechanism to predict failure - as for instance in measurement of inkjet nozzle temperature (as in the Allen document) to anticipate malfunction, or in sensing inkdrops in flight (as represented by the patent of Dr. Ix).

At least one earlier effort, represented by the Borrell document mentioned above, treats printing-element failure as a systematic result of environmental factors. Borrell measures parameters of the printer environment with an eye to entirely minimizing the occurrence of element failure.

The most direct approach, however, tries to isolate and quantitatively measure the failure itself - and to do so for each printing element individually. An ideal example of that approach for the inkjet environment appears in the previously mentioned Armijo document.

Armijo forms a test pattern with inkdrops from each nozzle (if functional) arrayed in a respective test group. He can then scan a sensor across each test group to detect functionality of each nozzle alone.

In his test pattern, a failed nozzle appears conspicuously as a missing dot in the overall test pattern. A weak nozzle appears as a dot of less than full, nominal saturation. A slightly misdirected nozzle, however, may be very difficult to detect from his test pattern.

Armijo's technique can be implemented with the naked eye, but is far more powerful when performed automatically and the results applied to initiating corrective action. His strategy provides excellent detailed information about every nozzle - except for incorrect aiming, as noted just above - but is time consuming.

(c) <u>Related uses of sensors</u> - Many different kinds of sensor measurements are made in laboratory and bench tests, or in preparation of color-rendering systems as in the Guo document - as distinguished from automatic measurements made in the field by operational printers. Some such lab measurements may quantify image quality.

The Guo document uses a carriage-mounted sensor to measure color averaged over an area, in color tiles, and applies spectral modeling to determine how to refine half-toning. A different document is likewise addressed to preparing a product line as such, rather than to automatic operational field calibration of finished individual printers.

All such bench and lab uses of sensors are regarded as intrinsically different from routine operational calibration use of sensors in end-user facilities by a finished printer product. The field of the present invention is limited to such latter operational uses.

In general, as mentioned above, earlier approaches to operational determination of printing-element failure have set out to isolate and measure causes as such. Thus for instance techniques known in the art operate sensors over printed patterns to measure swath height and spacing, and then determine how to accommodate any error found.

One technique in particular uses a bar-type pattern, and such patterns are also known (as in the Sievert and Nelson documents) for determining interpen alignments as well as imperfections - or some adverse results of broad tolerances - within individual printheads. Another art teaches measurement of color balance with a sensor mounted on an auxiliary sensor carriage.

These earlier sensors ride on carriages which operate in the scan direction. Some of them, however, may be activated for measurements while the print-medium advance mechanism is operating.

(d) <u>Printmode techniques</u> - It is now very well known that image quality can be improved in many ways through scanning multielement printing arrays plural times (rather than only once) over each portion of a printing medium. Although such operation sacrifices throughput, it remains appealing where highest quality is an objective.

Such plural- or multipass printmodes entail laying down in each pass of the printing array (e. g. inkjet pen) only a fraction of the total ink required in each section of the image. Any areas left unaddressed after each pass are completed by one or more later passes.

An intrinsic benefit of this type of printing is a tendency to conceal the edges of each printed swath, and also to hide light lines formed where individual printing elements or groups of elements are not marking fully. Such a tendency is inherent simply because a missing pixel row is somewhat less conspicuous when superimposed on a printed (or partially printed) row of another pass, than when seen against an unprinted (usually white) background of a printing medium.

In liquid-colorant printing systems, plural-pass operation has additional benefits. It tends to control bleed, blocking and cockle by reducing the amount of liquid that is all on the page at any given time, and in addition may facilitate shortening of drying time.

The specific partial-inking pattern employed in each pass is called a "printmask", and the way in which these different patterns add up to a single fully inked image is known as a "printmode". Heretofore, however, it has been recognized that printmodes and printmasks can themselves introduce undesired and conspicuous artifacts.

For example some printmodes use square or rectangular checkerboard-like patterns, which tend to create objectionable moiré effects when the patterns - or frequencies or harmonics generated within these patterns - are close to the patterns, frequencies or harmonics of interacting subsystems. As an example, such interferences may arise from dithering systems sometimes used to render an image.

In recent years major efforts have been made to mitigate problems of patterning, through introduction of randomization in the formation or selection of printmasks and dithering masks. These efforts have led in turn to realisation, on the one hand, that randomized masks if stepped or "tiled" through an image can themselves create strange and even bizarre, undesirable patterns; and on the other hand that randomness can itself be excessive, leading to conspicuous granularity in printed images.

Also it has become more clear that there are different kinds of randomness - whose uncontrolled mixture can produce noticeable and undesirable inconsistencies in spatial-frequency content. Very recent innovations (particularly the several patent documents of Garcia-Reyero et al.) therefore undertake to control the degree and character of randomization employed, as well as the size of unit patterns to be repetitively tiled in an image.

Yet another difficulty appears with increasing image-quality demands: although somewhat less conspicuous in plural-pass printing, a missing row or group of rows yet can remain noticeable. This too is disadvantageous and has been addressed by Garcia-Reyero through automatic reduction in usage, so-called "downweighting", of some known-weak or known-mispointed printing elements.

In dealing with thus-downweighted printing elements, recently introduced preferred technique includes automatic substitution of other elements. It remains to be seen, however, how best to identify printing elements that are weak, clogged, or incorrectly aimed.

If such elements can be found only through methods that consume undesirably large amounts of time, or colorant, or printing media, then the overall solution may yet be unacceptable. Thus - as to imperfectly functioning printing elements in general - even given extremely sophisticated corrective techniques, a limiting factor may yet be the identifying methods.

(e) Conclusion - As this discussion shows, limitations in the accuracy, speed and economy of methods for identifying failed or failing printing elements continue to impede achievement of uniformly excellent inkjet printing. Thus important aspects of the technology used in the field of the invention are amenable to useful refinement.

SUMMARY OF THE DISCLOSURE

The present invention introduces such refinement. In its preferred embodiments, the present invention has several aspects or facets that can be used independently, although they are preferably employed together to optimize their benefits.

In preferred embodiments of a first of its facets or aspects, the invention is apparatus for printing a desired image on a printing medium, based upon input image data, by construction from individual marks formed in a pixel grid. The apparatus includes at least one scanning multielement printing array that is subject to image-quality degradation.

Also included are some means for using the array to print a representative image for directly displaying the image quality. For purposes of generality and breadth in discussing the invention, these means will be called simply the "using means".

For purposes of this document, the using means are to be conceptualized very broadly. As the apparatus of the invention may be e. g. a printer, FAX machine, copier, or any other like apparatus, the using means may encompass - only by way of example - the usual printing hardware (mechanical components such as e. g. a carriage, print-medium advance, drive motors, electronics, etc.).

The using means also encompass any software, firmware or hardware (such as an ASIC) that responds to the image data and to the other elements discussed here, to control the mechanical components in printing of the representative image. Such control features may be running in the apparatus itself or in an associated computer or RIP (raster image processor), or in otherwise packaged interacting equipment.

The phrase "image quality" is to be distinguished from mechanical properties of the printing array. Thus, as mentioned above, it is heretofore known to print an image that isolates and displays engineering constructs.

Such constructs include, on one hand, mechanical misalignments - and on the other hand colorimetric error. What the representative image printed by the present invention displays directly, however, is instead an esthetic construct, namely image quality produced by the apparatus.

Although the concept of an esthetic construct may be inherently nonmechanical, some readers may find it helpful to think of an esthetic construct as a complex of combined effects of many mechanical (or colorimetric) factors. Different isolated mechanical and colorimetric errors may or may not compensate one another to produce a different overall result.

The apparatus also includes some means for automatically measuring the directly displayed image quality from the representative image. These means, again for breadth and generality, will be called the "measuring means".

Also included are some means for automatically modifying operation of the apparatus (again for like reasons the "modifying means") - to compensate for any image-quality degradation found from the measured image quality. The apparatus also includes some means for printing (the "printing means") using the modified operation.

These measuring, modifying and printing means too are to be conceived very broadly - that is, of like breadth and character to the using means discussed above. It may be noted that for all of these means, not only the program elements but also the mechanical components may take a great variety of different forms.

The foregoing may represent a description or definition of the first aspect or facet of the invention in its broadest or most general form. Even as couched in these broad terms, however, it can be seen that this facet of the invention importantly advances the art.

In particular, the use of a representative image, a real plot - perhaps e. g. displaying "combined effects" as mentioned earlier - rather than an artificial calibration pattern intended to isolate malfunctions, provides better feedback of the impact of a problem upon the root cause of that problem. For instance, directing a printer to print an area fill, and then measuring uniformity in the resulting area, is a way to directly assess the degree of uniformity - or its antithesis, the degree of banding.

Such direct assessment is better than assuming as in previous efforts that such banding is due to mispointed end nozzles in an inkjet pen - and measuring the degree of swath-height extension due to such supposedly misdirected nozzles. In addition the above-defined method avoids asking the human user to intervene in the image-quality refinement process, and also avoids a need to compensate errors that are not significantly reducing image quality.

Although the first major aspect of the invention thus significantly advances the art, nevertheless to optimize enjoyment of its benefits preferably the invention is practiced in conjunction with certain additional features or characteristics. In a first alternative preference, the using means include some means for varying at least one parameter that influences image quality - while the measuring means include some means for correlating measured image quality with the varying, to guide the earlier-mentioned modifying means.

Merely by way of example, suppose it is believed that banding arises (at least in part) from mispointed end nozzles, and therefore that adjusting medium-advance distance to accommodate mispointed end nozzles may be helpful. In this case the present invention may automatically print a representative image several times, but using a different one of several different medium-advance distances each time.

The invention then automatically measures the image quality - particularly some image-quality characteristic of interest, in this case the absence of banding - for each of the printouts. For later use the invention then selects the advance distance which is associated with the best automatically measured image quality.

This procedure selects the best advance distance, for purposes of banding - regardless whether the proposed theory (mispointed end nozzles) is correct or not. This procedure also at least tends to avoid the hazard of correcting one known root cause while inadvertently aggravating another that is unknown.

A second alternative preference is that the measuring means include some means for quantifying departures from image regularity along the array. Here the term "regularity" should be accorded a broad interpretation, since the real test of regularity is conformance with the way the representative image should appear - taking into consideration the data used to print it.

Thus for example if the data should in principle generate a very uniform area fill (and in fact this is a particularly practical and useful image for present purposes) then the test is literal regularity, i. e. uniformity in the representative image. If, however, the data represent for instance a smoothly varying ramp, or a complicated picture, then "regularity" here instead calls for some regularized tracking of that smoothly or complicatedly varying input information.

In the case of this preference for quantifying departures from regularity, it is also preferred that the modifying means include some means for automatically deriving reduced element-usage weights for use along the array, based on the quantified departures from image regularity. As will be recalled, the measurements as well as the printing and the derivation are all automatic; that is to say, this invention does not require user intervention.

Another general preference is that the modifying means include some means for automatically deriving reduced element-usage weights for use along the array, based upon the measured image quality. Later parts of this document set forth operating environments in which such reduced usage weights serve very effectively.

This reduced-weights preference is particularly preferable when the image-quality degradation arises at least in part from incorrectly aimed printing elements in the array. When the reduced-weights preference is observed, it is still further preferable that the automatically-deriving means include some means for following a formula to obtain the weights from the quantified departures.

In case the reduced-weights approach is used, still another preference comes into play if the "at least one" scanning array include a plurality of multielement printing arrays that print in a corresponding plurality of different colors or color dilutions - each multielement array being subject to respective image-quality degradation. In this case the using, measuring and modifying means preferably each operate with respect to each one of the plurality of multielement printing arrays respectively.

In preferred embodiments of its second major independent facet or aspect, the invention is a method of preparing an incremental printer for use. The method includes several steps, all automatic.

One of these steps is using a multielement printing array to print an image. Another step is scanning a sensor along the printed image in a medium-advance direction.

Still another step is analyzing variations in signals from the sensor to derive a correction pattern. This aspect of the invention thus focuses upon temporal behavior of signals, rather than absolute or averaged signals as in e. g. the earlier-mentioned colorimetric measurements of Baker.

Yet another step is applying the correction pattern to modify relative usage of elements along the array in later printing by the printer. Here the corrective focus is thus upon relative usage of different elements within a single array, rather than e. g. the interarray mechanical alignment of Sievert and Nelson.

The foregoing may represent a description or definition of the second aspect or facet of the invention in its broadest or most general form. Even as couched in these broad terms, however, it can be seen that this facet of the invention importantly advances the art.

In particular, this aspect of the invention develops adjustments for problems with individual printing elements - or groups of such elements - automatically. Participation by a user is not invoked or needed.

Although the second major aspect of the invention thus significantly advances the art, nevertheless to optimize enjoyment of its benefits preferably the invention is practiced in conjunction with certain additional features or characteristics. In particular, preferably the analyzing step includes finding nonuniformities in the printed image.

Another preference is further inclusion of the step of printing such an image using the modified relative usage of elements along the array. In this case preferably the printing step includes multipass printing.

When the invention is used with a printmask in plural-pass printing, it is particularly advantageous that the applying step include automatic printmask modification to bring different printing elements into operation - in substitution for printing elements with diminished usage. This type of functioning environment, highly complementary to the present invention, is documented in several above-mentioned patent documents of Garcia-Reyero and others.

Preferred embodiments of this second main facet of the invention are particularly useful when the "at least one" multielement printing array includes a plurality of constituent arrays which print in a corresponding plurality of different colors or color dilutions. In this case preferably the using, scanning, analyzing and applying steps are each performed with respect to each of the constituent arrays respectively.

In preferred embodiments of its third major independent facet or aspect, the invention is a method of detecting and compensating for banding. It is particularly useful for banding due to incorrectly aimed printing elements among correctly aimed printing elements, in an incremental printer.

The method includes the step of using the correctly and the incorrectly aimed printing elements to automatically print an image which does not illustrate aiming, as such, of individual printing elements. Another step is automatically sensing optical properties of the printed image.

A further step is automatically taking certain individual incorrectly aimed printing elements wholly or partially out of service. This step is based upon the automatically sensed optical properties of the image.

The foregoing may represent a description or definition of the third aspect or facet of the invention in its broadest or most general form. Even as couched in these broad terms, however, it can be seen that this facet of the invention importantly advances the art.

In particular the invention thus turns away from the prior-art paradigm of isolating and magnifying errors such as aiming of individual elements, and focuses instead upon final performance as distinguished from operational minutiae. Thereby the invention calls into play - though with an extremely modest investment in hardware, programming, and operating time as well - some of the most modern principles of heuristic systems, neural networks and the like.

Although the third major aspect of the invention thus significantly advances the art, nevertheless to optimize enjoyment of its benefits preferably the invention is practiced in conjunction with certain additional features or characteristics. In particular, preferably the using step includes printing a respective area fill with at least each group of printing-element arrays that prints a different colorant, in the printer.

In this particular case, it is also preferable that the using step include subdividing each group of printing-element arrays that prints a different colorant, into odd and even elements; and printing a respective area fill with each odd and even subdivision of elements respectively. This preference derives from the particularly successful current manufacturing technology for inkjet and like printheads, in which elements (nozzles) are formed in two adjacent staggered columns.

As will be apparent to people skilled in the manufacturing arts, despite absence of intention to vary characteristics as between the two columns it is an expectable consequence of this form of fabrication that such variation can and sometimes does in fact appear. To the extent of such appearances, separate testing of elements in the respective columns can sometimes refine performance in ways that would otherwise be inaccessible.

Another basic preference is that the sensing step include scanning an optical sensor along the printed image and detecting variation in response frequency. A following analysis based on frequency rather than amplitude is often particularly incisive in guiding the removal of some elements from service.

Yet another preference is that the taking step include setting a usage weight for substantially each of the individual printing elements. In this case, it is still more preferable that the usage weight for each nozzle number $\underline{i}$ be calculated as follows.

$$ w(i) \;=\; 1000 \times \left[ 1.0 - \alpha \left( \frac{\left| prof(i) - avg \right|}{\max \left| prof(i_m) - avg \right|} \right)^{\beta} \right]; \quad \alpha \subset [0.8, 1]; \; \beta = 1, 2, 3 $$

In this expression, prof [i] is a measured brightness of the printed image at a position corresponding to nozzle number i, avg is average measured brightness for all of the printing elements - or in other words the average of all the prof [i] - and max |prof [$i_m$]-avg| is a measured brightness of the printed image for a nozzle number $i_m$ which gives a maximum absolute value for the difference between prof [i] and avg. The variable a is in a range from 0.8 through 1.0, and β typically is a small integer - e. g. 1, 2 or 3.

If this preference is observed, then it is yet more highly preferable that the usage weight for each nozzle number i is:

W, where $0 \le$ W $\le 500$, if |prof [i]| $\ge$ avg + threshold;

and

1000 if |prof [i]| < avg + threshold.

Within these stated ranges, the values found to be ideal are W = 0 (zero); and threshold = 20.

In preferred embodiments of its fourth major independent facet or aspect, the invention is a printing method for use with at least one scanning multielement printing array that is subject to interactions among elements, leading to image-quality degradation. The method includes the step of defining a calibration image whose printing invokes the interactions among elements.

It also includes the step of using the array to print the calibration image. Another step is automatically measuring the printed calibration image.

The method further includes the step of automatically modifying operation of the apparatus, to compensate for any image-quality degradation found from the printed calibration image. Another step is subsequently printing using the modified operation.

The foregoing may represent a description or definition of the fourth aspect or facet of the invention in its broadest or most general form. Even as couched in these broad terms, however, it can be seen that this facet of the invention importantly advances the art.

In particular, this aspect of the invention is believed to be the first methodology which sets out to probe and correct for interelement effects on image quality. Such effects are considered to dominate some types of quality degradation.

Although the fourth major aspect of the invention thus significantly advances the art, nevertheless to optimize enjoyment of its benefits preferably the invention is practiced in conjunction with certain additional features or characteristics. In particular, preferably the calibration image comprises at least one area-fill pattern.

All of the foregoing operational principles and advantages of the present invention will be more fully appreciated upon consideration of the following detailed description, with reference to the appended drawings, of which:

BRIEF DESCRIPTION OF THE DRAWINGS

Fig. 1 is a diagram of a test pattern for use in preferred embodiments of the first main aspect of the invention, and particularly showing four printouts (views A, B, C and D respectively) - each with a pair of successive area-fill swaths (printed by four ganged printheads) separated by four different advance distances respectively;

Fig. 2 is a like diagram of a test pattern for use in preferred embodiments of the second main aspect of the invention, and particularly showing two successive area-fill swaths separated by a nominal advance distance;

Fig. 3 is a black-and-white reproduction of a representative color graph of representative sensor data - raw data acquired by a continuous vertical (i. e. advance-axis) scan of the Fig. 2 pattern, through each colorant-patch pair in turn (and also representatively illustrating graphs such as result from scanning the Fig. 1 pattern);

Fig. 4 is a like reproduction of a nozzle profile obtained from half the data for just one (cyan, odd - lower patch) of the colorant patches, shown together with an average value for the same patch;

Fig. 5 is a like reproduction of a nozzle-weight profile obtained by each of three different algorithms for calculating nozzle weighting from the Fig. 4 data;

Fig. 6 is a perspective view of the exterior of a printer embodying preferred embodiments of the invention;

Fig. 7 is a like view of a scanning carriage and medium-advance mechanism in the Fig. 6 printer;

Fig. 8 is a highly schematic diagram of the working system of the Fig. 6 and 7 printer, particularly as used to practice preferred embodiments of the first above-introduced aspect of the invention;

Fig. 9 is a flow chart showing operation of the Fig. 6 and 7 printer, particularly as used to practice the second and third aspects of the invention.

## DETAILED DESCRIPTION OF THE PREFERRED EMBODIMENTS

A common characteristic of preferred embodiments of the invention is that they print patterns which are real outputs of the printer which show real performance, real image quality and real problems - rather than, as explained earlier, relatively artificial constructs that are only theoretically related to those real phenomena. This characteristic will become even more clear from the detailed discussions that follow.

## 1. IMAGE-QUALITY OPTIMIZATION

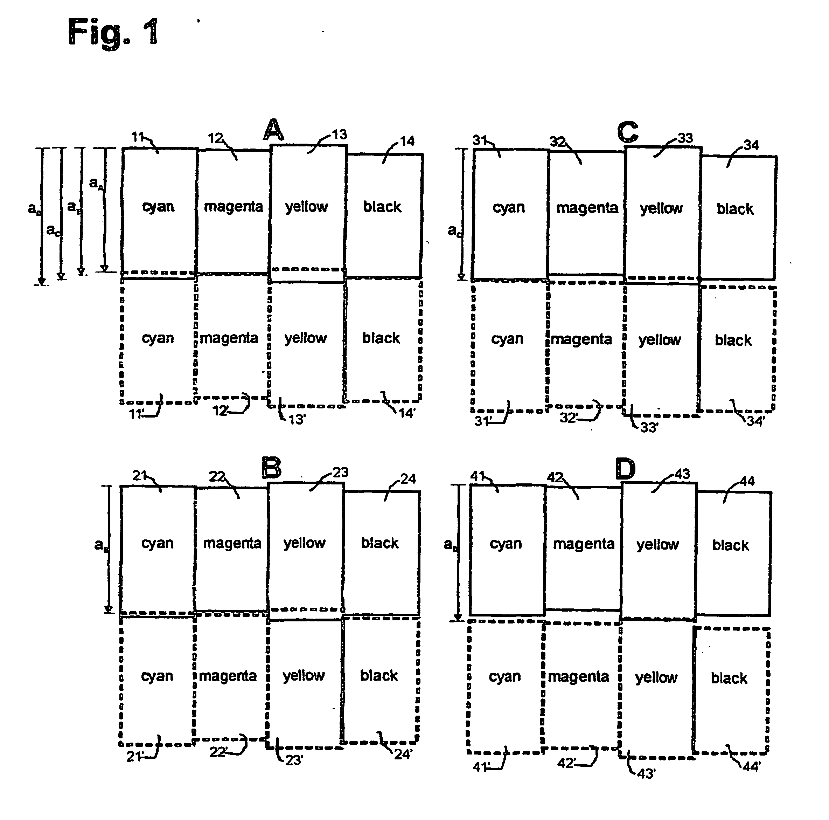

Although this first aspect of the invention can be used in many different ways, an example that is particularly simple to illustrate relates to choice of an optimum printing-medium advance. A preferred embodiment of this facet of the invention begins with printing of four area fills 11-14 (Fig. 1, view A) on a printing medium.

Each area fill is an area printed with nominally uniform density. A separate area fill is printed with each color which the printer can produce - in the example, four colors: cyan 11, magenta 12, yellow 13 and black 14.

Next the printing medium is advanced through a distance $a_A$ and then the machine again prints the area-fill pattern 11'-14'. For printing the overall pattern of view A, the advance stroke $a_A$ used is selected as an extreme value - in this case, a value that is expectably the smallest which might be suitable for the heights of the swaths printed in the four colors, respectively.

As the illustration suggests, the heights of the four swaths 11-14 are in general different from one another. None of the swath heights, however, is measured - and in fact a particular benefit of this method is that it optimizes image quality vs. print-medium advance distance whether or not the swath heights are the only influencing variables.

Before the present procedure is begun, preferably in some separate procedure the four printing-element arrays are mutually aligned - as for instance on centers by actual swath heights. For instance this may be accomplished as set forth in the previously mentioned Sievert document. In the example illustrated here, however, this has not been done and accordingly the individual color patches are not aligned either.

The preferred embodiment then continues with repetition of essentially the same two steps, printing a pair of patterns 21-24 and 21'-24' on the same printing medium below the first pair 11-14, 11'-14' as shown - but with a different advance stroke $a_B$ (view B) between the upper area-fill set 21-24 and the lower set 21'-24'. The length of this second advance $a_B$ is shorter than that of the first advance $a_A$, as seen at top left in Fig. 1 where lengths of advance strokes are compared.

Below the two pairs of patterns just discussed, two additional pairs of patterns, 31-34/31'-34' and 41-44/41'-44', are then also printed. To avoid making the details in Fig. 1 too shallow for good legibility, however, in the illustration these two additional pairs of patterns are positioned to the right of the first two, rather than below.

In printing the two additional pairs of patterns, the advance strokes $a_C$ and $a_D$ used are chosen to continue a sequence of progressively increasing advance distances. The longest stroke $a_D$ is selected as an extreme value - in this case, a value that is expectably the longest which might be suitable for the heights of the swaths printed in the four colors, respectively.

Depending on the variations expected from preliminary exploration, the total number of full patterns may be four as illustrated - or may be two, or seven, or indeed any number which is found to reasonably represent the range and reasonably canvass the useful increments between possible values of practical interest. For this purpose, the practical increments are a simple matter of the acceptable tolerance upon the finally selected advance value, in terms of image quality.

After the patterns have been printed, their uniformity is measured. This is done by scanning a sensor over the patches, along the vertical (advance-axis) direction.

Most commonly, but not necessarily, it is easiest to position the sensor on the scan carriage so that it can be deployed over the column of area-fill patches for one single color. The printer medium-advance mechanism is then operated to pass the patches for that color smoothly under the sensor.

The system is programmed to evaluate the resulting sensor signals to assess the uniformity in the signals vs.

time - particularly, but not exclusively, in the interface regions between the two patches of given color within each dual pattern. (Additional details of the scanning process and resulting signal patterns are presented below, in conjunction with discussion of preferred embodiments of the second and third aspects of the invention.) The signal that is most uniform as a function of time should correspond to the single optimum choice - as regards image quality - of advance distance for that particular color.

For example, with attention to the cyan patches 11-11', 21-21', 31-31', 41-41' it can be appreciated that for best abutment (not necessarily best overall performance) the ideal swath spacing is that in view C, where the two adjacent cyan patches 31, 31' are very nearly (though not quite) precisely abutting. In view A the corresponding two patches 11, 11' are rather severely overlapping, and in view B the analogous patches 21, 21' overlap less but still overlap distinctly.

The abutment failure in view C is noticeable but smaller than the overlap in view B. Finally the abutment failure between patches 41, 41' in view D is plainly greater than that in view C.

In the simple sketch of Fig. 1 it is not practical to meaningfully represent other sources of image degradation; but those skilled in the field will appreciate that such sources can exist and can be probed by the method illustrated. Thus the measurements outlined above can serve in automatic selection of the best print-medium advance (or other parameter) for the particular combination of color, printing-element array, printing medium, and mechanism.

For monochrome printing, i. e. when in fact there is only one column of area-fill patches rather than four columns, this simple automatic procedure is effective and virtually cost-free. It should be performed when a new printing-element array (e. g. pen) is installed, and periodically thereafter to keep in step with changes due to various developing factors such as clogging of nozzles and aging of firing resistors.

Unfortunately, as the illustration does show plainly, if the monitored column of patches is not the only column - i. e. if more than one printing array and more than one color are in use - then an advance value $a_C$ exemplarily selected by this process does not in general optimize abutment or more generally image quality for the other colors (i. e. other printing arrays). In the illustrated example, magenta patches 12, 12' are best abutted using the advance distance $a_A$ of view A - and the same is true for black patches 14, 14'. Yellow patches, however, in this example are best spaced by the advance distance $a_D$ of view D.

Thus as a rule it is not possible to select any single advance distance that can optimize image quality for all the different colors, at least not without some further provision to accommodate the different swath heights. Accordingly, sound practice of this aspect of the invention ordinarily entails some such added provision.

One suitable provision, as set forth in the previously mentioned Doval document, monitors colorant usage by the several print arrays to determine the color which is dominant in a particular image - or even in a particular swath. A good compromise then selects that color for use in the procedure introduced here. Image quality is thereby optimized for the color that is dominant in what is being printed.

Another approach is to perform the procedure of the present invention for all the colors, and then settle upon an average value of the best medium-advance strokes - or, adapting the Doval philosophy, a weighted average. The latter still favors dominant colors, but in a relative rather than absolute fashion.

Still another technique is seen in the previously mentioned Donovan and Boleda document. That technique effectively equalizes the advance distance for all the colors by performing for each pen the procedure presented here - and then scaling the data for all colors that would otherwise need advance distances longer than the shortest one. With the advance thus equalized for all the colors, the present invention then is able to optimize image quality for all the different colors.


2. MODIFYING RELATIVE USAGE OF PRINTING ELEMENTS


(a) Intrapen PAD - As in the foregoing subsection 1, the preferred embodiments discussed here print and then optically sense representative images that exemplify image quality. Instead of attempting to optimize the image quality directly, however, the methodology here uses the results to identify weak or misdirected printing elements.

The procedure then exploits multipass printmode techniques to divert operation from those to other elements. To obtain these results, preferred embodiments here begin with a different sort of calibration pattern.

This pattern exhibits image quality with respect to print-medium advance-axis directionality error (so-called "PAD error") within a printing-element array. The object is to reduce horizontal banding due to such error, by detecting such misdirected nozzles and reducing the extent of their usage - or, so to speak, "demoting" them - when constructing the printmasks.

Related efforts, generally involving such demotion, arise from the work of Garcia-Reyero and have relied upon nozzle-health information collected with a drop detector. Although restricted to the scan axis, such approaches have been shown to be extremely powerful in reducing banding due to nozzles misdirected in the scan axis. What is now sought with the present invention is instead information about nozzle misdirections in the printing-medium advance axis.

It is considered very desirable that any PAD measurement technique represent only a small investment in terms of colorant, printing medium, and time. It is also desirable that such measurements be amenable to coordination with other calibrations.

If more than one printing-element array (pen) is present, alignment of the arrays to one another (interpen alignment) should be performed before the intrapen PAD determinations discussed in this section - because the vertical correction is assumed in the intrapen procedure. In addition, any error-hiding mechanism should be enabled as well.

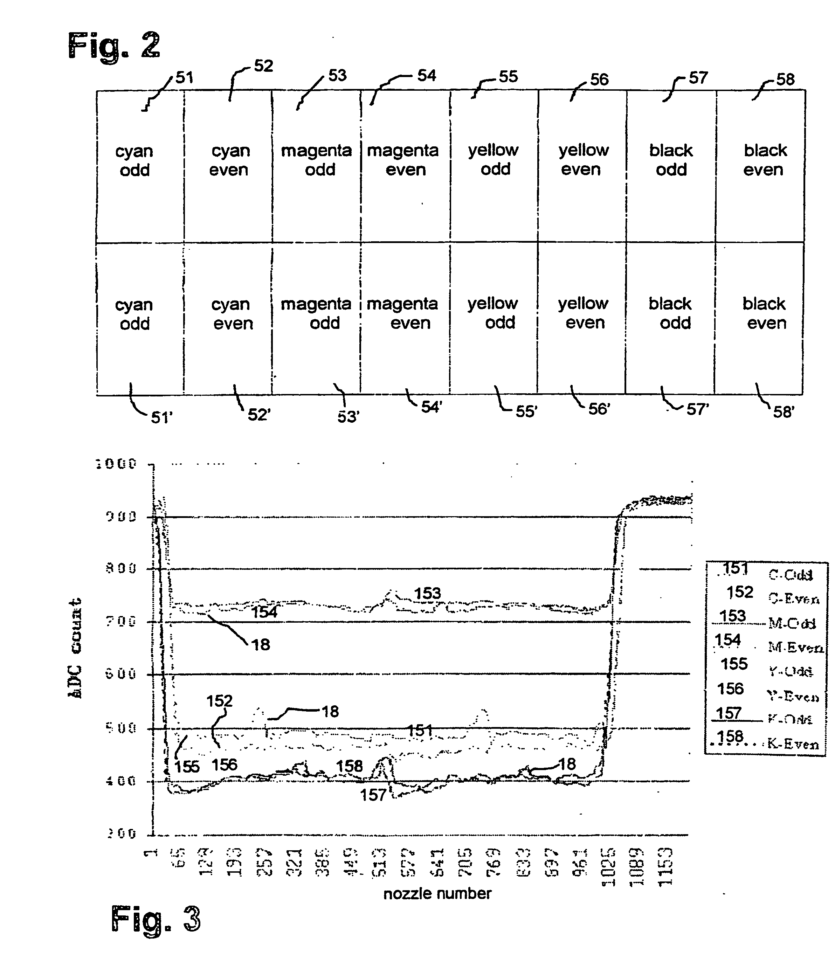

(b) Test pattern - For this purpose the pattern, as in the direct image-quality optimization discussed above, includes a set of side-by-side area fills, but now eight such patches 51-58 (Fig. 2) to segregate the image-quality properties of e. g. nozzles in the two nozzle columns of an inkjet pen. A printing-element array may instead have three or more columns of nozzles - or only one column. In such cases, advantageously the pattern is modified to probe the characteristics of the array more appropriately.

In any event, to best exemplify the image quality produced at the ends of the array as well as internally, the image-quality PAD-error calibration pattern preferably includes a second rank 51'-58' of the color patches abutted - or abutted as nearly as can be - below the first rank 51-58. From the earlier discussion of print-medium advances, it will be clear that a number of variants may be explored for purposes of providing a reasonable accuracy of abutment of the two rows of area-fill patches 51-58, 51'-58'.

The pattern thus includes one area-fill patch for the odd column and another for the even column, for each of the current pens. All the printing nozzles are fired in the same pass.

As an example the PAD calibration pattern has - from left to right - an area fill 51 formed with the cyan odd-numbered nozzles, then another 52 made by even-numbered cyan nozzles; next the magenta odd and then even nozzles 53, 54; and then yellow odd and even 55, 56. The row of area-fill patches concludes with area fills 57, 58 printed by the black odd- and black even-numbered nozzles. After an advance of the swath height as noted previously, to avoid end effects in the scanning process, a second row (substantially identical to the first) is printed.

(c) Sensing - The pattern is now ready for sensing. This is advantageously accomplished by vertical scan of a line sensor through each column of patches, generally as in the direct image-quality optimization introduced above.

Characterization of PAD error for each nozzle individually, through a printing and scanning technique, may be possible. The investment of time, colorant and printing medium, however, is probably unacceptable.

Preferred embodiments of the present invention proceed instead from a recognition that many current printheads have PAD-misdirected or weak nozzles in consecutive groups. The preferred embodiments therefore try to detect misdirections at a somewhat coarser scale, and thereby to identify such groupings.

In preliminary investigations of two-column nozzle arrays, such groups of weak or misaimed nozzles generally appear independently in both columns. The pattern of such nozzles exhibits no relationship with the physical primitives used to fire them.

Standard line sensors are thus suited to this investigation, even though generally resolution of such devices is inadequate to provide information in a practical way about every nozzle individually. Each color patch is scanned once in the medium-advance axis, using e. g. a blue light-emitting diode (LED) for the yellow patches and an amber LED for all the others - but both LEDs can be turned on and used at the same time.

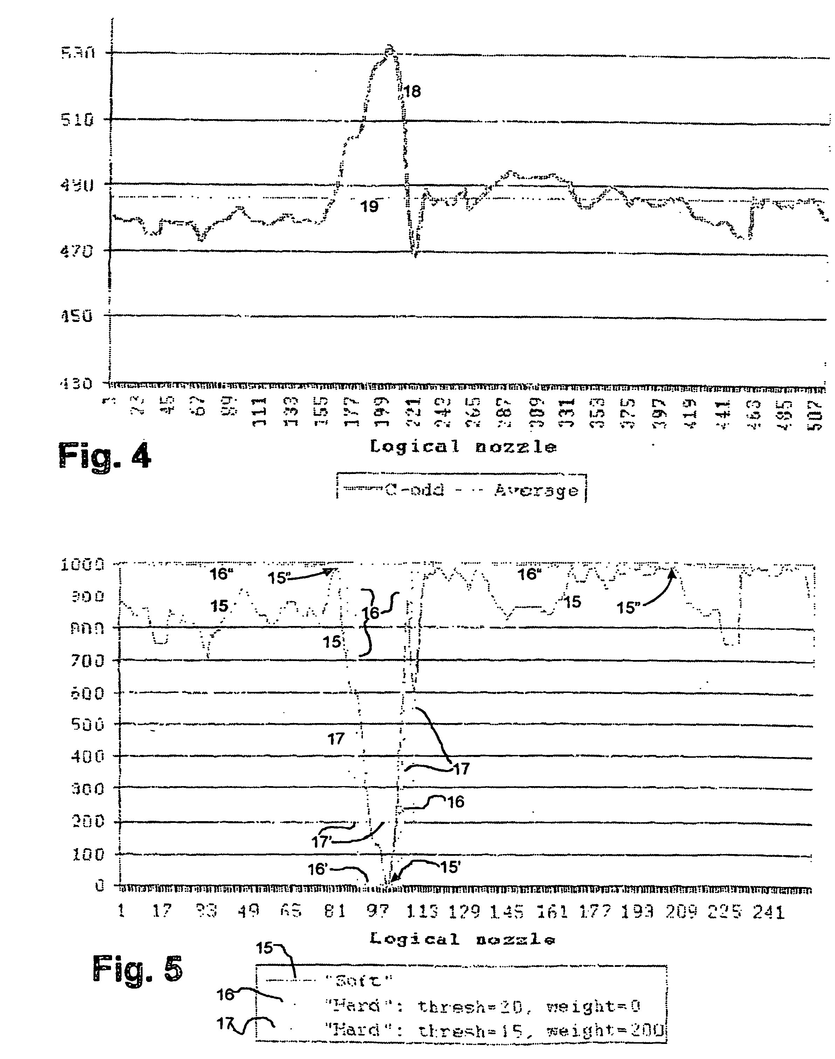

At a resolution of 24 dots/mm (600 dots per inch, dpi), 1200 samples are acquired. These data may be presented as automatically printed graphs 151-158 (Fig. 3) of digitized sensor output vs. nozzle number - i. e. position along the printing-element array - for all the patches respectively.

Thus one first graph line 151 corresponds to one patch 51, another line 152 to another patch 52, etc. These same reference numerals 151-158 have been applied to the lines in the key section in the right margin, as well as the corresponding lines within the body of the graph.

For purposes of reproduction in this document all the graph lines are presented in gray; in many regions of the illustration therefore it is not possible to distinguish each line from all the others. For present purposes, however, it is not essential to be able to trace the individual lines - and in any event they are merely exemplary. Only the overall character of the collected data assemblage is significant in this disclosure.

The graph represents brightness along the ordinate; hence the plateau at upper right and its implicit equivalent at upper left are the brightest regions of the representative image, namely the uninked printing medium (e. g. paper). The greater the amount of colorant, therefore, the darker the sensed region and the lower the graphed response; thus the lowest lines in the illustration correspond to the darkest colorant, namely black 157, 158.

Due to the use of selected and relatively narrow illumination wavebands, however, the sensor response does not track absolute colorant luminances (or relative luminances that might be perceived by a human observer), as between the different colors. For example, yellow lines 155, 156 too appear near the bottom of the illustration.

Visually, groups of weak or misdirected nozzles appear as darker or lighter zones in the printed patches. In the graphed data they appear as vertical excursions 18 (Figs. 4 and 5) - usually relatively small - above or below their associated trend lines representing local-average optical density within the printed patches.

An upward excursion thus corresponds to a lighter region - which is to say, a region that has not received as much colorant as its neighbors. Such a region presumably results from weakness or misdirection of the nozzles nominally present in that region: those nozzles eject colorant either in inadequate amounts or into a neighboring area rather than the nominally assigned region.

(d) <u>Notation for locating nozzles</u> - A first task, to enable automatic operation, is identifying (i. e. locating) the portions of the sensed pattern that correspond to operating print elements (nozzles). Those portions are only a subset of the overall 1200 samples $\underline{s}$ (i) - see abscissa in Fig. 3 - nominally taken along the test-pattern height.

In the example, the number of nozzles that are actually printing is 1024. These active 1024 samples are located/identified from the 1200 total samples by first determining an average of all the sensor responses:

$$average \;\; = \;\; \tfrac{1}{1200}\sum_{i=1}^{1200} s(i).$$

This value is found simply to serve as a threshold for distinguishing between printed and unprinted slices in the pattern. In other words, any sample with greater sensor response (appearing higher in the graph) - i. e., a brighter region - can be considered unprinted, and any sample with lesser response (lower in the graph) can be considered printed.

Thus in mathematical notation the first printed sample <u>FPS</u> is defined as -

$$\underline{FPS} \;\equiv\; \text{first sample in } \underline{s}\ (\underline{i}) \text{ for which } \underline{s}\ (\underline{i}) \leq \underline{average};$$

while the last printed sample is -

$$\underline{LPS} \;\equiv\; \text{last sample in } \underline{s}\ (\underline{i}) \text{ for which } \underline{s}\ (\underline{i}) \leq \underline{average}.$$

Now taking FPS and LPS as the nozzle numbers for the first and last printed samples, then the nozzle number of the central printed sample can be expressed as:

$$\underline{CPS} \;\equiv\; \tfrac{1}{2}\,(\underline{FPS} + \underline{LPS}).$$

Based on these benchmarks, any groupings desired for special treatment or specific analysis can now be defined straightforwardly. Thus the profile for the first 128 nozzles in either the odd- or even-numbered nozzle patch is obtained from CPS upward as -

$$1 \leq \underline{nozz} \leq 128 \Rightarrow \underline{prof}\ (\underline{nozz}) = \underline{s}\ [\underline{CPS} + 2(\underline{nozz}\text{-}1)].$$

Here the index "nozz" is counting within only one or the other column of nozzles (or other type of printing elements) in the staggered two-column array of elements. The adjustment "-1" moves the counter to the central sample CPS for nozz = 1; and the factor of two reflects the relationship between the nozzle number along one column only and the overall nozzle number along the two-column array.

Thus the value "prof" of the profile along one column for a particular element "nozz", from #1 to #128 inclusive within a column, is the sample value at a position which is above the central sample CPS by twice the adjusted column index. This convention for nozzle identification is adopted in Fig. 4 (note the abscissa designation "logical nozzle"), with $\underline{i}$ renamed to span only the 512 active positions - i. e., i = [1,512] so in general i ≠ nozz.

The above expression can be simply decremented by 512 counts to identify the profile for the last 128 nozzles in either patch - located from CPS downward:

$$129 \leq \underline{nozz} \leq 256 \Rightarrow \underline{prof}\ (\underline{nozz}) = \underline{s}\ [\underline{CPS} + 2\ (\underline{nozz}\text{-}1) - 512].$$

As an example of the first relation, for an arbitrarily chosen nozzle #43 in one or the other column, if the middle sample is for instance CPS = 520 then

$$\underline{prof}\ (43) = \underline{s}\ [520 + 2(43\text{-}1)] = \underline{s}\ (604).$$

(e) Nozzle weighting - With the foregoing notation for nozzle identification in place, this discussion turns briefly to preferred notation for weighting of nozzle usage. The above-mentioned documents of Garcia-Reyero et al. go into this topic extensively and need not be duplicated here.

It can be said here that usage weighting provides the means for diverting to healthier nozzles the printing tasks (more specifically, data to be printed) that would otherwise be assigned to weak or misdirected nozzles. The innovations of the present invention identify candidate nozzles for such diversion, and also teach ways to downweight the usage of those candidates - i. e. their previously mentioned "demotion".

The Garcia-Reyero models will take up the job from that point, making certain that the diverted data are not merely withdrawn from the problem nozzles but in fact also assigned to other, healthier nozzles through the printmask-generation process. Thus the present invention, given the representative-image printout and the sensing discussed in subsections (b) through (d) above, next turns to computing nozzle weights w(i), for nozzle numbers i in the range [1,512].

One premise of this effort is that these procedures must be in some way compatible with aspects of the Garcia-Reyero systems that also undertake to control the usage weighting of the same nozzles. One relatively early such provision is, for example, the so-called "error hiding" process.

To obtain such compatibility, a particularly simple rule is this: for a given nozzle, the "final weight" - the one to be used in constructing masks - should be the more restrictive of the two obtained from the error hiding etc. and the present intrapen-PAD investigation. Up to this time, no effort has been made to otherwise integrate these two algorithms or the information collected from them.

In the notation now in use, a weight of 1000 means "always use this nozzle to construct the mask", and a weight of 0 (zero) means "never use it". Weights suggested for demotion of nozzles are in the range [200,500] or in some analyses [0,500].

Several strategies for establishing nozzle weights, based on a nozzle health map such as Fig. 3 or 4, have been investigated. These are helpfully grouped for discussion as follows.

(f) Soft weighting profiles - This approach develops a continuous nozzle-weighting map for each nozzle half column, within each color. Weights are more restrictive for nozzles whose sensor responses are further from the average for the half-column.

First the half-column average "avg" is defined:

$$avg \;\; = \;\; \tfrac{1}{512} \sum_{i=1}^{512} prof\,(i)$$

Then this value is used, in a manner perhaps analogous to the full-column parameter "average" introduced earlier, as a reference point for comparison of the varying values in the nozzle profile. (In general avg $\neq$ average).

For example, a relatively simple weighting calculation is:

$$w(i) \;\; = \;\; 1000 \times \left( 1.0 - \alpha\, \frac{|prof\,(i) - avg|}{\max|prof\,(i_m) - avg|} \right); \quad \alpha \subset [0.8, 1]$$

in which the value 1000 just scales the weighting factor to a large integer for computational convenience, and $i_m$

is the value of i which produces the maximum absolute value of the difference between prof ($i_m$) and avg. The two absolute values, both adjusted for the half-column avg as shown, then scale the ordinate of sensor responses to variation from that half-column average.

The ratio of those two adjusted values then normalizes the sensor readings to an overall range of such variation from average. Consider the case in which a nozzle is good, with prof (i) very nearly equal to avg for nozzle i - but with max prof ($i_m$) significantly farther from avg.

Under these circumstances, the relative-badness ratio

$$\frac{|\,prof\,(i)\,-\,avg|}{max|prof\,(i_m)\,-\,avg|}$$

within the expression can neither blow up nor become unity. The ratio then approaches a small number.

In this case the multiplier of $\alpha$ becomes negligible in comparison with 1.0. The expression then roughly reduces to w(i) = 1000 (15" in Fig. 5) for nozzle i.

If on the other hand a nozzle is bad (weak or misdirected), thereby making |prof(i) - avg| nearly as large as max|prof($i_m$) - avg)|, then for that nozzle the relative-badness ratio in the expression approaches unity. Given that $\alpha$ is in the range from 0.8 to 1.0 as indicated, then 1 - $\alpha$·1 = 0.2 to zero for this bad nozzle, and the overall expression roughly reduces to w = 0 (15', Fig. 5) to 200.

Consideration of these two extreme cases makes clear that using the above expression for printing-element arrays of practical interest can yield nozzle weights between minimum values of 0 to 200 and a maximum value of 1000. Such a weighting scheme, for $\alpha$ = 1, produces a representative weighting function consisting of a continuously and highly variable weight 15 (Fig. 5).

Thus in the expression for w (i) if the relative-badness ratio $\frac{|prof\,(i)\,-\,avg|}{max|prof\,(i_m)\,-\,avg|}$ is for example one-half (the relative sensor reading for a particular nozzle is half as bad as the maximum), the resulting weight w(i) = 500 or 600 depending on the value of a. If the nozzle is worse and the ratio rises from one-half to three-quarters, then the weight will fall to w(i) = 250 or 400.

In practicing these preferred embodiments of the invention, competing philosophies can operate: (1) perhaps it is of highest importance to be sure that an image being printed is printed well, and continued use of weak nozzles potentially impairs this objective; even if a nozzle is downweighted, continued potential use of that nozzle may in some circumstances degrade printed image quality; but (2) on the other hand, even weak nozzles may be able to make a useful and important contribution, in the sense of both printing a particular image and relieving healthy nozzles from excess loading and premature breakdown.

One way to promote this second philosophy is to adopt weighting schemes that essentially defer the greatest downweighting impact until a nozzle is almost completely nonfunctional. For example the relative-badness ratio, instead of being linear, may be raised to a power:

$$w(i) \;=\; 1000 \times \left[ 1.0 - \alpha \left( \frac{\left|prof\,(i) - avg\right|}{\max \left|prof\,(i_m) - avg\right|} \right)^{\beta} \right]; \quad \alpha \subset [0.8,1]; \; \beta = 1,2,3$$

As before, the relative-badness ratio rises with nozzle deterioration. That rising relative value, however, being fractional, initially produces a more slowly rising $\alpha$ term if raised to a power as in this expression, than if linear as in the preceding simpler expression. Therefore the descent of the weight toward e. g. zero or 200 is initially slower with worsening nozzle performance.

Since the ultimate value of the relative-badness ratio is unchanged, however, the nozzle weight must decrease abruptly as nozzle weakness or misdirection finally rises close to the worst condition. In short, for progressively larger exponents $\beta$ the weighting responds more like a step function.

The weight nearly toggles over to the final assigned value of 1000(1-$\alpha$) just as the nozzle deteriorates very nearly to the worst sensor value in the array. Many other kinds of computations, some simpler than given by the expression under discussion, can be used to promote the same operating philosophy.

(g) <u>Hard weighting profiles</u> - On the other hand, if it is desired to pursue the first-stated philosophy above, i. e. to remove nozzles from service rather early in the onset of their poor performance, then this too can be promoted by various types of calculations. Hard weighting is one type that lends itself readily to this philosophy.

In this sort of system, samples for which the profile value prof(i) exceeds the average plus a threshold are assigned a restrictive value:

$$|\underline{prof}\,[\underline{i}]| \geq \underline{avg} + \underline{threshold} \Rightarrow \underline{w}(\underline{i}) = \underline{W}, 0 \leq \underline{W} \leq 500;$$

$$|\underline{prof}\,[\underline{i}]| < \underline{avg} + \underline{threshold} \Rightarrow \underline{w}(\underline{i}) = 1000.$$

Such a regimen - and some soft weighting strategies as well - have been tested with several numerical combinations. Interestingly, the best performance appears to have been obtained with a hard profile, and in particular with threshold = 20 and W = 0; however, this result is not absolutely clear.

3. MECHANICAL AND PROGRAM/METHOD FEATURES

The invention is amenable to implementation in a great variety of products. It can be embodied in a printer/ plotter that includes a main case 1 (Fig. 1) with a window 2, and a left-hand pod 3 which encloses one end of the chassis. Within that enclosure are carriage-support and -drive mechanics and one end of the printing-medium advance mechanism, as well as a pen-refill station with supplemental ink cartridges.

The printer/plotter also includes a printing-medium roll cover 4, and a receiving bin 5 for lengths or sheets of printing medium on which images have been formed, and which have been ejected from the machine. A bottom brace and storage shelf 6 spans the legs which support the two ends of the case 1.

Just above the print-medium cover 4 is an entry slot 7 for receipt of continuous lengths of printing medium 4. Also included are a lever 8 for control of the gripping of the print medium by the machine.

A front-panel display 211 and controls 212 are mounted in the skin of the right-hand pod 213. That pod encloses the right end of the carriage mechanics and of the medium advance mechanism, and also a printhead cleaning station. Near the bottom of the right-hand pod for readiest access is a standby switch 214.

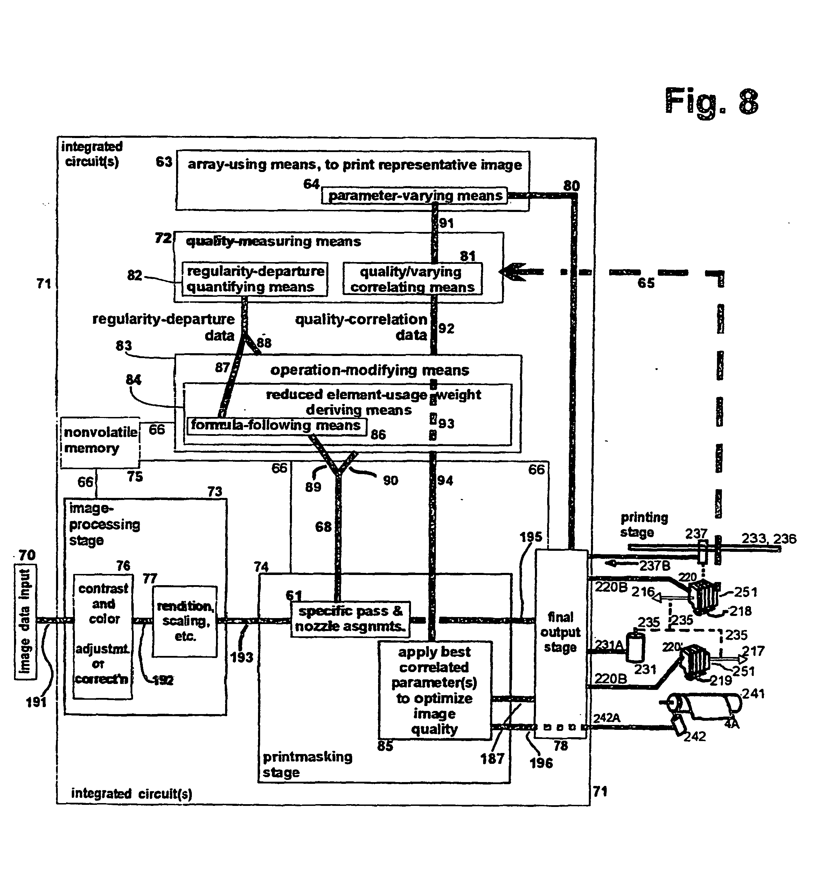

Within the case 1 and pods 3, 213 a cylindrical platen 241 (Fig. 8) - driven by a motor 242, worm and worm gear (not shown) under control of signals from a digital electronic processor 71 - rotates to drive sheets or lengths of printing medium 4A in a medium-advance direction. Print medium 4A is thereby drawn out of the print-medium roll cover 4.

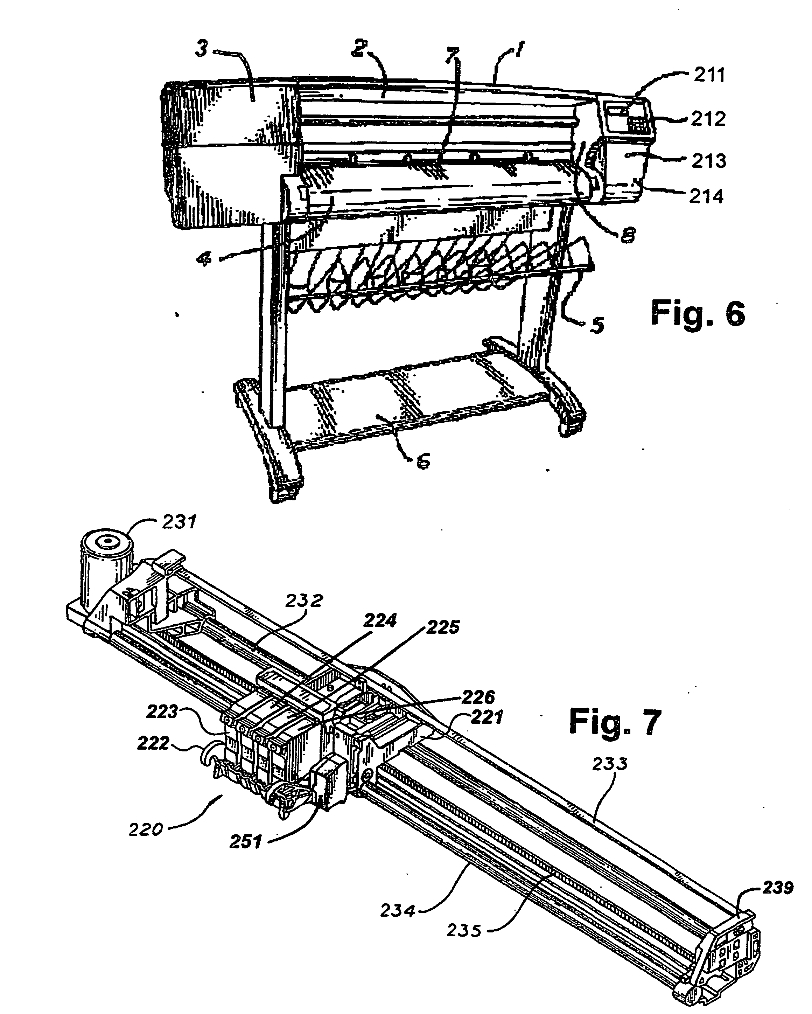

Meanwhile a pen-holding carriage assembly 220 (Figs. 7 and 8) carries several pens 223-226 (Fig. 7) back and forth across the printing medium, along a scanning track - perpendicular to the medium-advance direction - while the pens eject ink. For simplicity's sake, only four pens are illustrated; however, as is well known a printer may have six pens or more, to hold different colors - or different dilutions of the same colors as in the more-typical four pens. The medium 4A thus receives inkdrops for formation of a desired image, and is ejected into the print-medium bin 5.

A very finely graduated encoder strip 233, 236 (Fig. 8) is extended taut along the scanning path of the carriage assembly 220 and read by another, very small automatic optoelectronic sensor 237 to provide position and speed information 237B for the microprocessor. One advantageous location for the encoder strip is shown in several of the earlier cross-referenced patent documents at 236, immediately behind the pens.

A currently preferred position for the encoder strip 33 (Fig. 7), however, is near the rear of the pen-carriage tray - remote from the space into which a user's hands are inserted for servicing of the pen refill cartridges. For either position, the sensor 237 is disposed with its optical beam passing through orifices or transparent portions of a scale formed in the strip.

The pen-carriage assembly 220, 220' (Fig. 8) is driven in reciprocation by a motor 231 - along dual support and guide rails 232, 234 - through the intermediary of a drive belt 235. The motor 231 is under the control of signals from digital processors 71.

Naturally the pen-carriage assembly includes a forward bay structure 222 for pens - preferably at least four pens 223-226 holding ink of four different colors respectively. Most typically the inks are yellow in the leftmost pen 223, then cyan 224, magenta 225 and black 226. As a practical matter, chromatic-color and black pens may be in a single printer, either in a common carriage or plural carriages.

Also included in the pen-carriage assembly 220, 220' is a rear tray 221 carrying various electronics. Figs. 6 and 7 most specifically represent a system such as the Hewlett Packard printer/plotter model "DesignJet 1000", which does not include the present invention. These drawings, however, also illustrate certain embodiments of the invention, and - with certain detailed differences mentioned below - a printer/plotter that includes preferred embodiments of the invention.

Before further discussion of details in the block diagrammatic showing of Fig. 8, a general orientation to that drawing may be helpful. Most portions 70, 73,75-78 across the lower half of the diagram, including the printing stage 4A-251 at far right and some aspects of the pass and nozzle assignments 61, are generally conventional and represent the context of the invention in an inkjet printer/plotter.

The top portion 63-72, 81-86 and certain parts 85, 68, 89, 90, 94, 187, 196 of the lower portions of the drawing represent the present invention. Given the statements of function and the swath diagrams presented in this document, an experienced programmer of ordinary skill in this field can prepare suitable programs for operation of all the circuits.

The pen-carriage assembly is represented separately at 220 when traveling to the left 216 while discharging ink 218, and at 220' when traveling to the right 217 while discharging ink 219. It will be understood that both 220 and 220' represent the same pen carriage.

The previously mentioned digital processor 71 provides control signals 220B to fire the pens with correct timing, coordinated with platen drive control signals 242A to the platen motor 242, and carriage drive control signals 231A to the carriage drive motor 231. The processor 71 develops these carriage drive signals 231A based partly upon information about the carriage speed and position derived from the encoder signals 237B provided by the encoder 237.

(In the block diagram all illustrated signals are flowing from left to right except the information 237B fed back from the sensor - as indicated by the associated leftward arrow.) The codestrip 233, 236 thus enables formation of color inkdrops at ultrahigh precision during scanning of the carriage assembly 220 in each direction - i. e., either left to right (forward 220') or right to left (back 220).

New image data 70 are received 191 into an image-processing stage 73, which may conventionally include a contrast and color adjustment or correction module 76 and a rendition, scaling etc. module 77.

Information 193 passing from the image-processing modules next enters a printmasking module 74. This may include a stage 61 for specific pass and nozzle assignments. The latter stage 61 performs generally conventional functions, but in accordance with certain aspects of the present invention is preferably constrained by inputs 68 as will be described.

Integrated circuits 71 may be distributive - being partly in the printer, partly in an associated computer, and partly in a separately packaged raster image processor. Alternatively the circuits may be primarily or wholly in just one or two of such devices.

These circuits also may comprise a general-purpose processor (e. g. the central processor of a general-purpose computer) operating software such as may be held for instance in a computer hard drive, or operating firmware (e. g. held in a ROM 75 and for distribution 66 to other components), or both; and may comprise application-specific integrated circuitry. Combinations of these may be used instead.

As set forth above, the image to be printed may be a representative test image of numerous color patches or swatches, for reading by an optical sensor to generate calibration data. For present purposes, such test images are particularly, though not exclusively, for use in detecting misdirected printing elements - e. g. here nozzles of the pens.

For generation of such test images, the apparatus of the invention includes - in the integrated-circuit section 71 (Fig. 8) - array-using means 63 that generate control signals 80 for operation of the final output stage 78. These signals drive the printing stage seen at right.

Some portions of Fig. 8 correspond to the "image-quality optimization" embodiments described in subsection 1 of this "DETAILED DESCRIPTION" (which also correspond to the "first alternative preference" discussed in connection with the first main aspect of the invention, in the earlier "SUMMARY" section). In the case of those "quality optimization" embodiments, the array-using means 63 include parameter-varying means 64 - and in this case the control signals 80 include a series of different parameters for test.

Such a series of parameters may for example include a sequence of different printing-medium advance values, as described in detail in subsection 1 above. Each value is duly implemented by the final output stage 78 and its advance-mechanism signals 242A.

These signals 242A are further implemented, in printing of the test images, by the movements of the advance motor 242, drive 241 and medium 4A. The sequence of parameter values is also signaled 91 to quality-measuring means 72, for use in correlating means 81 as will be described shortly.

A small automatic optoelectronic sensor 251 rides with the pens on the carriage and is directed downward to obtain data about image quality (here e. g. uniformity in area fills, etc., all as set forth earlier in this document). The sensor 251 signals are coordinated (not shown) with movements of the carriage and advance mechanism, and thereby can readily perform optical measurements 65, 81, 82 (Fig. 8) of the printed test images; suitable algorithmic control 82 is well within the skill of the art, guided by the discussions here.

The quality-measuring means 72 receive measurement data 65 returned from the sensor 251. In the case of the "quality optimization" embodiments discussed in subsection 1 above, the quality-measuring means 72 include means 81 for correlating these quality data 65 with the parameter-varying data 91 from the above-mentioned varying means 64.

The correlation data 92 in turn pass to operation-modifying means 83. As indicated in earlier discussions of the optimization aspects and embodiments of the invention, these operation-modifying means 83 may take any of a very great variety of forms, influencing 94 the establishment 85 of a correspondingly great variety of apparatus settings.

Examples of such parameters include printmode; print-medium advance stroke and speed; scan velocity; inkdrop energies, sizes and velocities; depletion, propletion and discretionary-dotting ratios; balance point between randomization vs. granularity; and nozzle weighting distributions. In any event, the settings in turn pass 187 to the final output stage 78 for control of the printing stage.

Solely for purposes of definiteness, note that a particularly effective form of correlation data 92 relates to variation of the medium-advance parameter. In this case, these data 92 are then passed 93 through the operation-modifying means 83 and on as instructions 94 to the application module 85, specifically to provide control signals 196 for operation 242A of the advance motor 242.

Other portions of Fig. 8 relate to printing-element usage-modifying aspects and embodiments of the invention, discussed in subsection 2 of this "DETAILED DESCRIPTION". In this case generally there may be no parameter-varying means 64 or correlating means 81, but there are measurement control signals 80 and resulting measurement data 65.

In this embodiment, the measurement data 65 proceed to means 82 for quantifying the extent to which each image patch is irregular. These quantifying means 82 form part of the quality-measurement means 72, and generate "departure" data 87, 88 for passage to the operation-modifying means 83.

It will be understood that departure data generally 88 may be applied - within the scope of the invention as defined by certain of the appended claims - in a great variety of ways. These may include transmission of adjusting signals generally 90/68, 94 to the printmasking stage for modification of pass/nozzle assignments 61 or other settings 85, 187, 196 to control the final output stage 78.

A particularly beneficial way, however, of using the departure data is routing 87 of those data to means 84 for deriving reduced element-usage weights. These means have been discussed in some detail above, and in particular advantageously include means 86 for following a formula to derive such weights. The resulting output weights 89 from the formula then become part (or all) of the data 68 to the pass/nozzle assigning module 61.

The two main alternative embodiments discussed above are in general compatible with each other and can be practiced together. For best image quality, such combinations are preferred.

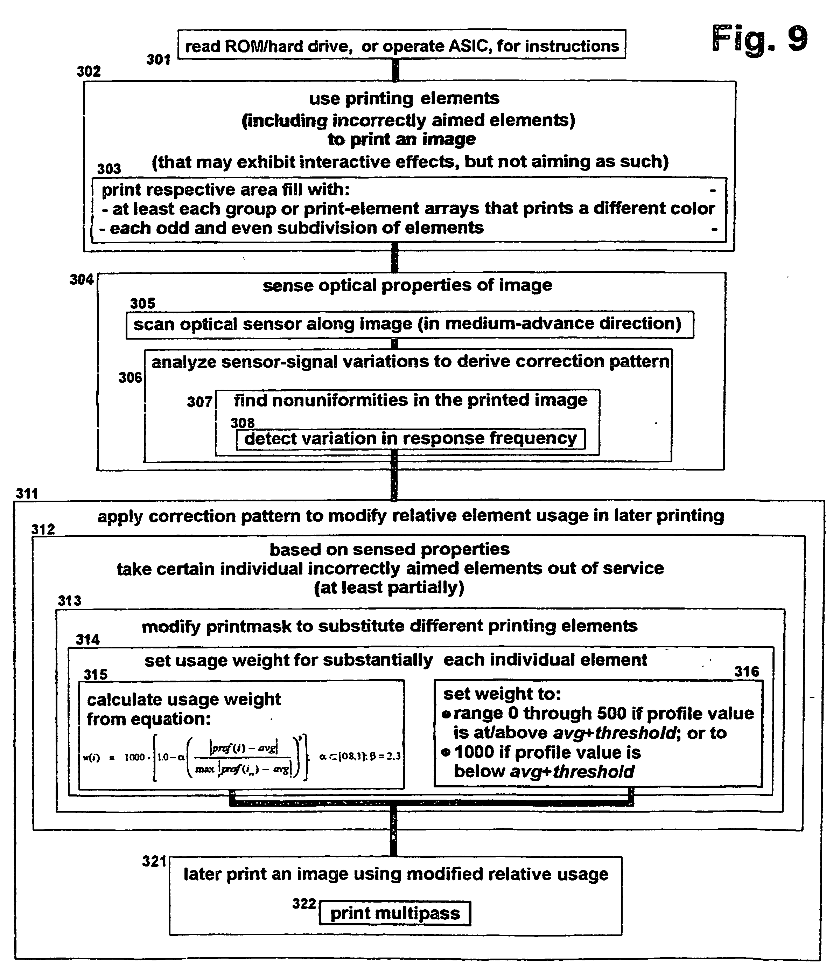

In operation the system retrieves 301 (Fig. 9) its operating program appropriately - i. e., by reading instructions from memory in case of a firmware or software implementation, or by simply operating dedicated hardware in case of an ASIC or like implementation. Once prepared in this way, the method proceeds to the procedure 301 through 322 as illustrated.

The substeps 315 and 316 may be regarded as alternative. After the steps above 321 have been performed for particular operating conditions, the printing steps 321, 322 may be iterated until (as indicated below) the operating conditions are known or suspected to have changed.

In view of the foregoing it is believed that the person skilled in this field will find the remaining details of Fig. 9 self explanatory.


4. OBSERVED IMPROVEMENTS IN PERFORMANCE


Following the measurements and corrective action outlined in section 1 or 2 above, testing of printouts is advisable to determine whether image-quality is improved in terms of banding reduction. For this purpose two complementary kinds of printout are helpful - a representative set of nominally uniform area fills at various densities to assess quality in areas that are regularly defined geometrically, and an arbitrary graphic of some sort to assess quality in areas whose geometrical boundaries are irregular.

In evaluating the present invention, for the first type of printout twenty-four rectangular area-fill patches were used. These were grouped in sets of four, each with a different density - respectively one hundred, seventy-five, fifty, and twenty-five percent.

Patches also sampled six different colors - black, cyan, magenta, cyan plus magenta, cyan plus yellow, and magenta plus yellow. For the second type of printout a modern artwork by the artist Mariscal was used.

The Mariscal work has many areas of uniform color but greatly differing hue, density, shape and size. In these regards, although critically regarded as an original piece of fine art it is somewhat analogous to some commercial graphics.

Both plots were always printed using an eight-pass bidirectional printmode. This printmode was one of the previously mentioned printmode Shakes types, in which:

- ■ use of downweighted nozzles was automatically reduced or eliminated as called for by the particular weights assigned; and

■ use of other nozzles was automatically invoked,

- all as set forth in the several previously mentioned patent documents defining the Shakes system. Thus problematic nozzles were not just turned off, but in addition others were called into service to cover their tasks.

For testing environment, these images were formed on two types of standard printing medium using a current prototype printer. Printheads were selected for two conditions: no nozzles out, but including nozzles with very serious misdirections.

With both types of printouts (i. e. the patches and the Mariscal work), banding reduction is clearly noticeable when weak or misdirected nozzles occur in consecutive groups of four or five, or more. In other words the more banding originally, the more noticeable the improvement. For fewer than four or five consecutive poor nozzles, banding reduction is hardly discernible.

With the regular color patches, the greatest improvement was seen in the monochrome (black, cyan and magenta) samples. Little improvement was visible in any case, for the two-color (cyan plus magenta, cyan plus yellow, and magenta plus yellow) patches.

In the Mariscal piece, two major improvements in banding can be appreciated with the intrapen PAD calibration: minor amplitude (i. e. light-to-dark range within a nominally uniform area fill) and minor frequency (fewer horizontal bands per printed length - in the medium-advance direction).

Repeatability was quite satisfactory for the calibration itself - e. g., the profiles (Figs. 3 and 4) and the resulting nozzle weights (Fig. 5) found from the initial scanning of printed patches (e. g. Fig. 2). Even with a single sensor scan over each patch in the printed pattern, the overall procedure repeatability was good from calibration to calibration.

Thus for groups of approximately twenty consecutive known weak nozzles, ninety percent of results detected between eighteen and twenty-two nozzles. This was true for two standard media types used in repeatability testing.

As to accuracy, for groups of ten consecutive nozzles in a column, shifts of three nozzles when applying corrections to the nozzle-health database did not seem to induce significant changes in terms of banding reduction. This appears to mean that a lack of resolution of 3 x 2 = 6 pixels at 24 dot/mm (600 dpi) does not produce a significant effect when trying to conceal or compensate for large groups (i. e. ten or more) of misdirected nozzles.

5. FURTHER REFINEMENT

Even better precision in the intrapen PAD calibration if desired is probably available through scanning the pattern patches several times, or many times - or from printing and scanning more than one set of the patches, or both. The inventors have not done this, or the other very straightforward refinements described below.

It is believed that an incidental improvement in accuracy (or at the least efficiency in the test) could be obtained by printing the pattern in one single plot, in two passes. The inventors have printed the pattern in two independent plots, with a nominal advance between them.

An improvement in results from the hard-weight strategy described in subsection 2(g) can be sought by setting threshold or W - or both - as a function of the real variability of the nozzle profile. Also of interest are measurements of performance with other printmodes.

Printmode variations should particularly include different numbers of passes, particularly fewer than discussed above. Unidirectional printing is also of interest, as is performance with other printing media.

Another variant is characterization of all the printing elements at the same time, that is to say in one group, rather than considering e. g. two columns of nozzles separately. It is also desirable to work out final details as to the frequency of the calibration: whether it should be integrated with other calibrations, performed after some number of plots or some number of weeks, or only whenever some feature (such as a pen) of the system is changed, or initiated by the user, and so forth.

Before implementing the invention in a product, it is advisable to verify that image-quality improves when the printheads produce banding due to intrapen PAD error, and also that no relatively significant drawback occurs. Such verification should consider a controlled population of printheads that do exhibit intrapen PAD error, and should encompass different scanning situations (including for instance a line sensor with extreme specifications, and extreme ambient light conditions - including sunlight).

The ideal practice of the invention encompasses complete integration with other features of Shakes. Another particularly helpful verification is running of the calibration in printers that exhibit persistent banding not resolved by another technique.

Those of ordinary skill wishing to practice the invention will find that a little time spent in preparing straightforward software utilities can be very rewarding:

■ a routine that enables/disables usage of a nozzle health map parallel to any automatically used in the machine by an error-hiding or other Shakes-like procedure;

■ a module that specifies the weights of all the printing nozzles in the map, for a given pen (it is convenient to default all nozzles to uninitialized, i. e. zero); and

■ another which performs a whole intrapen PAD calibration, using a hard-weighting strategy with threshold set to 20 and a weak-nozzle weight of 200 - filling the map with the results and enabling the usage of them, particularly to facilitate evaluation of the system operation during the development.

Any convenient syntax may be used for these utilities; however, use of a syntax that will be compatible with final implementation coding is advisable to save time later.

As the basic benefits of the invention have been demonstrated, the invention can now be practiced readily with very minor study. The refinements noted here are easily pursued, only as a matter of expanding those benefits.

The above disclosure is intended as merely exemplary, and not to limit the scope of the invention - which is to be determined by reference to the appended claims.

**Claims**

1.  Apparatus for printing a first image on a printing medium (4A), based upon input image data (70), by construction from individual marks formed in a pixel grid; said apparatus comprising:

    at least one scanning multielement printing array (223-226) that is subject to image-quality degradation;
    means (63) for using the array to print a second known image (11-14, 11'-14', 21-24, 21'-24', 31-34, 31'-34', 41-44, 41'-44'; 51-58, 51'-58') for directly displaying the image quality; such apparatus being **characterised by** further comprising
    means (72) for automatically measuring a combined effect of a plurality of errors influencing the directly displayed image quality (65) from the second image;
    means (83) for automatically modifying operation of the apparatus, to compensate for any image-quality degradation found from the measured combined effect and
    means (78, 220, 231, 241) for printing using the modified operation said first image.

2.  The apparatus of claim 1, wherein:

    the using means comprise means (64) for varying at least one parameter that influences the image quality; and
    the measuring means comprise means (81) for correlating the measured combined effect with the variations of said at least one parameter to guide the modifying means.

3.  The apparatus of claim 1, wherein:

    the measuring means comprise means (82) for quantifying departures (65) from image known uniformity along a medium-advance direction.

4.  The apparatus of claim 3, wherein:

    the quantifying means comprise a sensor (251) for scanning along the printed image in the medium-advance direction, and
    the modifying means comprise:

    means (82, 84) for analyzing variations (151, 180 in signals from the sensor to derive a correction pattern (15-17, 15'-17'), and

    means (86, 61, 85) for applying the correction pattern to modify relative usage of elements along the array in later printing by the printer.

5.  The apparatus of claim 4, for use with a printmask in plural-pass printing, and wherein:

    the applying means comprise means (61) for automatic printmask modification to bring different printing elements into operation in substitution for printing elements with diminished usage.

6. The apparatus of claim 3, wherein:

   the modifying means comprise means (84) for automatically deriving reduced element-usage weights (15-17, 15'-17') for use along the printing array, based upon the quantified departures (65, 151, 18) from image regularity (19, 159).

7. The apparatus of claim 6, wherein:

   the automatically deriving means comprise means (86) for following a formula to obtain said weights from said quantified departures.

8. The apparatus of claim 7, wherein:

   the usage weight for each nozzle number i is calculated as:

$$w(i) \;=\; 1000 \times \left[ 1.0 - \alpha \left( \frac{\left| prof(i) - avg \right|}{\max \left| prof(i_m) - avg \right|} \right)^{\beta} \right];$$

   $\alpha \subset [0.8,1]$; $\beta = 1, 2, 3$

   wherein prof [i] is a measured brightness of the printed image at position corresponding to nozzle number i, avg is average measured brightness for said printing elements, prof [$i_m$] is measured brightness of the printed image for a nozzle number $i_m$ which gives maximum absolute value of the difference between prof [i] and avg; and $\alpha$ is in a range from 0.8 through 1.0, and $\beta$ is an integer in a range from 1 through 3.

9. The apparatus of claim 7, wherein the usage weight for each nozzle number i is:

   $\underline{W}$, where $0 \leq W \leq 500$, if $|\underline{prof}\ [\underline{i}]| \geq \underline{avg} + \underline{threshold}$;

   and

   1000 if $|\underline{prof}\ [\underline{i}]| < \underline{avg} + \underline{threshold}$.

   wherein prof [i] is a measured brightness of the printed image at position corresponding to nozzle number i, avg is average measured brightness for said printing elements, prof [i] is measured brightness of the printed image for nozzle number i which gives maximum absolute value of the difference between prof [i] and avg; and $\alpha$ in in a range from 0.8 through 1.0, and $\beta$ is an integer in a range from 1 through 3 and threshold is an arbitrary number

10. The apparatus of claim 9, wherein:

    $\underline{W} = 0$; and
    $\underline{threshold} = 20$.

11. The apparatus of any one of claims 1 through 10, wherein:

    the at least one scanning multielement printing array comprises a plurality (223-226) of multielement printing arrays that print in a corresponding plurality of different colors or color dilutions, each multielement printing array being subject to respective image-quality degradation; and
    each of said steps of using (63, 302, measuring (72, 304) and modifying (83, 311) operate with respect to each one of the plurality of multielement printing arrays respectively.

12. A printing method for use with at least one scanning multielement printing array (223-226) that is subject to interactions among elements, leading to image-quality degradation; said method comprising the steps of:

defining a first image (11-14, 11'-14', 21-24, 21'-24', 31-34, 31'-34', 41-44, 41'-44'; 51-58, 51'-58') whose printing invokes the interactions among elements;
using (302) the array to print the first image;
automatically measuring (304) a combined effect of a plurality of errors from the printed first image;
automatically modifying (311) operation of the apparatus, to compensate for any image-quality degradation caused by such combined effect found from the printed first image; and
subsequently printing (321) using the modified operation.

13. The method of claim 12, wherein: the using step includes the further step of printing at least one area-fill pattern (11-14, 11'-14', 21-24, 21'-24', 31-34, 31'-34', 41-44, 41'-44'; 51-58, 51'-58').

14. The method of claim 12 or 13, wherein:

the at least one scanning multielement printing array comprises a plurality (223-226) of multielement printing arrays that print in a corresponding plurality of different colors or color dilutions, each multielement printing array being subject to respective image-quality degradation; and
each of said steps of using (63, 302, measuring (72, 304) and modifying (83, 311) operate with respect to each one of the plurality of multielement printing arrays respectively.

**Patentansprüche**

1. Vorrichtung zum Drucken eines ersten Bilds auf einem Druckmedium (4A) basierend auf Eingangsbilddaten (70) durch einen Aufbau von einzelnen Markierungen, die in einem Pixelgitter gebildet sind, wobei die Vorrichtung folgende Merkmale aufweist:

zumindest ein Abtast-Mehrelement-Druckarray (223 - 226), das einer Bildqualitätsverschlechterung unterliegt;

eine Einrichtung (63) zum Verwenden des Arrays, um ein zweites bekanntes Bild (11 - 14, 11' - 14', 21 - 24, 21' - 24', 31 - 34, 31' - 34' , 41 - 44, 41' - 44', 51 - 58, 51' - 58') zum direkten Anzeigen der Bildqualität zu drucken; wobei eine derartige Vorrichtung **dadurch gekennzeichnet ist, dass** dieselbe ferner folgende Merkmale aufweist:

eine Einrichtung (72) zum automatischen Messen einer kombinierten Wirkung einer Mehrzahl von Fehlern, die die direkt angezeigte Bildqualität (65) von dem zweiten Bild beeinflussen;

eine Einrichtung (83) zum automatischen Modifizieren des Betriebs der Vorrichtung, um irgendeine Bildqualitätsverschlechterung zu kompensieren, die anhand der gemessenen kombinierten Wirkung gefunden wird; und

eine Einrichtung (78, 220, 231, 241) zum Drucken des ersten Bilds unter Verwendung des modifizierten Betriebs.

2. Die Vorrichtung gemäß Anspruch 1, bei der:

die Verwendungseinrichtung eine Einrichtung (64) zum Variieren zumindest eines Parameters aufweist, der die Bildqualität beeinflusst; und

die Messeinrichtung eine Einrichtung (81) zum Korrelieren der gemessenen kombinierten Wirkung mit den Variationen des zumindest einen Parameters aufweist, um die Modifiziereinrichtung zu führen.

3. Die Vorrichtung gemäß Anspruch 1, bei der:

die Messeinrichtung eine Einrichtung (82) zum Quantifizieren von Abweichungen (65) von einer bekannten Bildeinheitlichkeit entlang einer Medienvorschubrichtung aufweist.

4. Die Vorrichtung gemäß Anspruch 3, bei der:

> die Quantifiziereinrichtung einen Sensor (251) zum Abtasten entlang des gedruckten Bilds in die Medienvorschubrichtung aufweist; und

> die Modifiziereinrichtung folgende Merkmale aufweist:

>> eine Einrichtung (82, 84) zum Analysieren von Variationen (151, 180) bei Signalen von dem Sensor, um ein Korrekturmuster (15 - 17, 15' - 17') abzuleiten, und

>> eine Einrichtung (86, 61, 85) zum Anwenden des Korrekturmusters, um eine relative Verwendung von Elementen entlang dem Array bei einem späteren Drucken durch den Drucker zu modifizieren.

5. Die Vorrichtung gemäß Anspruch 4 für eine Verwendung bei einer Druckmaske bei einem Mehrdurchlaufdrucken und bei der:

> die Anwendeeinrichtung eine Einrichtung (61) für eine automatische Druckmaskenmodifikation aufweist, um unterschiedliche Druckelemente in Ersetzung für Druckelemente mit einer verringerten Verwendung in Betrieb zu bringen.

6. Die Vorrichtung gemäß Anspruch 3, bei der:

> die Modifiziereinrichtung eine Einrichtung (84) zum automatischen Ableiten von Reduziert-Elementverwendung-Gewichtungen (15 - 17, 15' - 17') für eine Verwendung entlang dem Druckarray basierend auf den quantifizierten Abweichungen (65, 151, 18) von einer Bildregelmäßigkeit (19, 159) aufweist.

7. Die Vorrichtung gemäß Anspruch 6, bei der:

> die automatische Ableiteinrichtung eine Einrichtung (86) zum Folgen einer Formel aufweist, um die Gewichtungen aus den quantifizierten Abweichungen zu erhalten.

8. Die Vorrichtung gemäß Anspruch 7, bei der:

> die Verwendungsgewichtung für jede Düsennummer $\underline{i}$ berechnet wird als:

$$w(i) = 1000 \times \left[ 1{,}0 - \alpha \left( \frac{|prof(i) - avg|}{\max |prof(i_m) - avg|} \right)^{\beta} \right];$$

$$\alpha \subset [0{,}8,\ 1];\ \beta = 1,\ 2,\ 3$$

> wobei prof [i] eine gemessene Helligkeit des gedruckten Bilds bei einer Position ist, die einer Düsennummer i entspricht, avg eine durchschnittliche gemessene Helligkeit für die Druckelemente ist, prof [$i_m$] eine gemessene Helligkeit des gedruckten Bilds für eine Düsennummer $i_m$ ist, die einen maximalen absoluten Wert der Differenz zwischen prof [i] und avg gibt; und $\alpha$ in einem Bereich von 0,8 bis 1,0 liegt und $\beta$ eine Ganzzahl in einem Bereich von 1 bis 3 ist.

9. Die Vorrichtung gemäß Anspruch 7, bei der die Verwendungsgewichtung für jede Düsennummer i wie folgt lautet:
   $\underline{W}$, wobei $0 \leq \underline{W} \leq 500$, falls $|\underline{prof}$ [i]$| \geq \underline{avg}$ + $\underline{Schwelle;}$ und
   1000, falls $|\underline{prof}$ [i]$| < \underline{avg}$ + $\underline{Schwelle;}$
   wobei prof [i] eine gemessene Helligkeit des gedruckten Bilds bei einer Position ist, die einer Düsennummer i entspricht, avg eine durchschnittliche gemessene Helligkeit für die Druckelemente ist, prof [$i_m$] eine gemessene Helligkeit des gedruckten Bilds für eine Düsennummer $i_m$ ist, die einen maximalen absoluten Wert der Differenz zwischen prof [i] und avg gibt; und $\alpha$ in einem Bereich von 0,8 bis 1,0 liegt und $\beta$ eine Ganzzahl in einem Bereich von 1 bis 3 ist und Schwelle eine beliebige Zahl ist.

**10.** Die Vorrichtung gemäß Anspruch 9, bei der:

$\underline{W}$ = 0; und

$\underline{Schwelle}$ = 20.

**11.** Die Vorrichtung gemäß einem der Ansprüche 1 bis 10, bei der:

das zumindest eine Abtast-Mehrelement-Druckarray eine Mehrzahl (223 - 226) von Mehrelement-Druckarrays aufweist, die in einer entsprechenden Mehrzahl von unterschiedlichen Farben oder Farbverdünnungen drukken, wobei jedes Mehrelement-Druckarray einer jeweiligen Bildqualitätsverschlechterung unterliegt; und

jeder der Schritte eines Verwendens (63, 302), Messens (72, 304) und Modifizierens (83, 311) mit Bezug auf jedes der Mehrzahl von jeweiligen Mehrelement-Druckarrays wirksam ist.

**12.** Ein Druckverfahren für eine Verwendung bei zumindest einem Abtast-Mehrelement-Druckarray (223 - 226), das Wechselwirkungen unter Elementen unterliegt, was zu einer Bildqualitätsverschlechterung führt; wobei das Verfahren folgende Schritte aufweist:

Definieren eines ersten Bilds (11 - 14, 11' - 14', 21 - 24, 21' - 24', 31 - 34, 31' - 34', 41 - 44, 41' - 44', 51 - 58, 51' - 58'), dessen Drucken die Wechselwirkungen unter Elementen aufruft;

Verwenden (302) des Arrays, um das erste Bild zu drucken;

automatisches Messen (304) einer kombinierten Wirkung einer Mehrzahl von Fehlern aus dem gedruckten ersten Bild;

automatisches Modifizieren (311) eines Betriebs der Vorrichtung, um irgendeine Bildqualitätsverschlechterung zu kompensieren, die durch eine derartige kombinierte Wirkung bewirkt wird, die anhand des gedruckten ersten Bilds gefunden wird; und

nachfolgendes Drucken (321) unter Verwendung des modifizierten Betriebs.

**13.** Verfahren gemäß Anspruch 12, bei dem:

der Verwendungsschritt den weiteren Schritt eines Druckens zumindest eines Flächenfüllmusters (11 - 14, 11' - 14', 21 - 24, 21' - 24', 31 - 34, 31' - 34', 41 - 44, 41' - 44', 51 - 58, 51' - 58') umfasst.

**14.** Das Verfahren gemäß Anspruch 12 oder 13, bei dem:

das zumindest eine Abtast-Mehrelement-Druckarray eine Mehrzahl (223 - 226) von Mehrelement-Druckarrays aufweist, die in einer entsprechenden Mehrzahl von unterschiedlichen Farben oder Farbverdünnungen drukken, wobei jedes Mehrelement-Druckarray einer jeweiligen Bildqualitätsverschlechterung unterliegt; und

jeder der Schritte eines Verwendens (63, 302), Messens (72, 304) und Modifizierens (83, 311) mit Bezug auf jedes der Mehrzahl von jeweiligen Mehrelement - Druckarrays wirksam ist.

**Revendications**

**1.** Appareil d'impression d'une première image sur un support d'impression (4A), sur la base de données (70) d'image entrées, par construction à partir de marques individuelles formées dans une grille de pixels;
ledit appareil comprenant:

au moins un arrangement d'impression (223 à 226) par balayage, à éléments multiples, qui est sujet à une dégradation de qualité d'image;
un moyen utilisateur (63) de l'arrangement pour imprimer une deuxième image connue (11 à 14, 11' à 14', 21 à 24, 21' à 24', 31 à 34, 31' à 34', 41 à 44, 41' à 44'; 51 à 58, 51' à 58') pour afficher directement la qualité d'image;

cet appareil étant **caractérisé en ce qu'**il comprend en outre:

un moyen (72) de mesure automatique d'un effet combiné d'une pluralité d'erreurs influençant la qualité (65) de l'image directement affichée, à partir de la deuxième image;
un moyen (83) de modification automatique du fonctionnement de l'appareil afin de compenser toute dégradation de qualité d'image trouvée, à partir de l'effet combiné mesuré; et
un moyen (78, 220, 231, 241) d'impression de ladite première image en utilisant le fonctionnement modifié.

**2.** L'appareil selon la revendication 1, dans lequel:

le moyen utilisateur comprend un moyen (64) de modification d'au moins un paramètre qui influence la qualité d'image; et
le moyen de mesure comprend un moyen (81) de corrélation entre l'effet combiné mesuré et les variations dudit paramètre unique au moins, pour guider le moyen de modification.

**3.** L'appareil selon la revendication 1, dans lequel:

le moyen de mesure comprend un moyen (82) de quantification d'écarts (65) par rapport à une uniformité connue d'image le long d'une direction d'avance de support.

**4.** L'appareil selon la revendication 3, dans lequel:

le moyen de quantification comprend un capteur (251) pour explorer le long de l'image imprimée dans la direction d'avance de support, et
le moyen de modification comprend:

un moyen (82, 84) d'analyse de variations (151, 180) dans des signaux provenant du capteur afin de dériver un motif de correction (15 à 17, 15' à 17'), et
un moyen (86, 61, 85) d'application du motif de correction de manière à modifier une utilisation relative d'éléments le long de l'arrangement lors d'une impression ultérieure par l'imprimante.

**5.** L'appareil selon la revendication 4, à utiliser avec un masque d'impression dans une impression à plusieurs passages, dans lequel:

le moyen d'application comprend un moyen (61) de modification automatique du masque d'impression afin que des éléments d'impression différents soient mis en fonctionnement, en substitution à des éléments d'impression à utilisation diminuée.

**6.** L'appareil selon la revendication 3, dans lequel:

le moyen de modification comprend un moyen (84) de dérivation automatique de pondérations réduites (15 à 17, 15' à 17') d'utilisation d'éléments à utiliser le long de l'arrangement d'impression, sur la base des écarts quantifiés (65, 151, 18) par rapport à une régularité d'image (19, 159).

**7.** L'appareil selon la revendication 6, dans lequel:

le moyen de dérivation automatique comprend un moyen (86) destiné à suivre une formule pour obtenir lesdites pondérations à partir desdits écarts quantifiés.

**8.** L'appareil selon la revendication 7, dans lequel:

la pondération d'utilisation pour chaque numéro i de buse est calculée par:

$$w(i) = 1000x\left[1,0 - \alpha\left(\frac{|prof(i) - avg|}{\max|prof(i_m) - avg|}\right)\beta\right];$$

$$\alpha \subset [0{,}8{,}1]; \beta = 1, 2, 3$$

où prof[i] est une brillance mesurée de l'image imprimée à une position correspondant à une buse numéro i, avg est une brillance mesurée moyenne pour lesdits éléments d'impression, prof[$i_m$] est une brillance mesurée de l'image imprimée pour une buse numéro $i_m$ qui donne une valeur absolue maximale de la différence entre prof [i] et avg; et · est dans une plage de 0,8 à 1,0 et · est un entier dans une plage de 1 à 3.

9.  L'appareil selon la revendication 7, dans lequel la pondération d'utilisation pour chaque buse numéro i est:

W, où 0 · W · 500, si |prof[i]|· avg + seuil, et 1000 si |prof[i]| < avg + seuil.
où prof[i] est une brillance mesurée de l'image imprimée à une position correspondant à une buse numéro i, avg est une brillance mesurée moyenne pour lesdits éléments d'impression, prof[$i_m$] est une brillance mesurée de l'image imprimée pour une buse numéro $i_m$ qui donne une valeur absolue maximale de la différence entre prof[i] et avg; et · est dans une plage de 0,8 à 1,0 et · est un entier dans une plage de 1 à 3, et le seuil est une valeur arbitraire.

10. L'appareil selon la revendication 9, dans lequel:

W = 0 et
Seuil = 20.

11. L'appareil selon l'une quelconque des revendications précédentes, dans lequel:

l'arrangement unique au moins d'impression par balayage, à éléments multiples, comprend une pluralité (223 à 226) d'arrangements d'impression à éléments multiples qui impriment dans une pluralité correspondante de couleurs ou de dilution de couleurs différentes, chaque arrangement d'impression à éléments multiples étant sujet à une dégradation respective de la qualité d'image; et
chacune desdites étapes d'utilisation (63, 302), de mesure (72, 304) et de modification (83, 311) est mise en oeuvre pour chacun des arrangements d'impression à éléments multiples de la pluralité respectivement.

12. Un procédé d'impression à utiliser avec au moins un arrangement d'impression (223 à 226) par balayage, à éléments multiples, qui est sujet à des interactions entre éléments, conduisant à une dégradation de la qualité d'image; ledit procédé comprenant les étapes consistant à:

définir une première image (11 à 14, 11' à 14', 21 à 24, 21' à 24', 31 à 34, 31' à 34', 41 à 44, 41' à 44'; 51 à 58, 51' à 58') dont l'impression appelle les interactions entre éléments;
utiliser (302) l'arrangement pour imprimer la première image;
mesurer automatiquement (304) un effet combiné d'une pluralité d'erreurs à partir de la première image imprimée;
modifier automatiquement (311) le fonctionnement de l'appareil pour compenser toute dégradation de qualité d'image provoquée par cet effet combiné, trouvée à partir de la première image imprimée; et
imprimer ensuite (321) en utilisant le fonctionnement modifié.

13. Le procédé selon la revendication 12, dans lequel l'étape d'utilisation inclut l'étape additionnelle consistant à imprimer au moins un motif de remplissage de zone (11 à 14, 11' à 14', 21 à 24, 21' à 24', 31 à 34, 31' à 34', 41 à 44, 41' à 44'; 51 à 58, 51' à 58').

14. Le procédé selon la revendication 12 ou 13, dans lequel l'arrangement unique au moins d'impression par balayage, à éléments multiples, comprend une pluralité (223 à 226) d'arrangements d'impression à éléments multiples qui impriment dans une pluralité correspondante de couleurs ou de dilutions de couleurs différentes, chaque arrangement d'impression à éléments multiples étant sujet à une dégradation respective de la qualité d'image; et
chacune desdites étapes d'utilisation (63, 302), de mesure (72, 304) et de modification (83, 311) est mise en oeuvre pour chacun des arrangements d'impression à éléments multiples de la pluralité respectivement.

# Fig. 1

## Fig. 2

| cyan odd | cyan even | magenta odd | magenta even | yellow odd | yellow even | black odd | black even |
|----------|-----------|-------------|--------------|------------|-------------|-----------|------------|
| 51 | 52 | 53 | 54 | 55 | 56 | 57 | 58 |
| cyan odd | cyan even | magenta odd | magenta even | yellow odd | yellow even | black odd | black even |
| 51' | 52' | 53' | 54' | 55' | 56' | 57' | 58' |

## Fig. 3

| | |
|---|---|
| 151 | C-Odd |
| 152 | C-Even |
| 153 | M-Odd |
| 154 | M-Even |
| 155 | Y-Odd |
| 156 | Y-Even |
| 157 | K-Odd |
| 158 | K-Even |

**Fig. 4**

Logical nozzle

C-odd --- Average

**Fig. 5**

Logical nozzle

15 — "Soft"
16 — "Hard": thresh=20, weight=0
17 — "Hard": thresh=15, weight=200

Fig. 6

Fig. 7

**Fig. 8**

**Fig. 9**

301 read ROM/hard drive, or operate ASIC, for instructions

302
use printing elements
(including incorrectly aimed elements)
to print an image
303 (that may exhibit interactive effects, but not aiming as such)

print respective area fill with:  -
- at least each group or print-element arrays that prints a different color
- each odd and even subdivision of elements  -

304 sense optical properties of image

305 scan optical sensor along image (in medium-advance direction)

analyze sensor-signal variations to derive correction pattern
306

307 find nonuniformities in the printed image

308 detect variation in response frequency

311 apply correction pattern to modify relative element usage in later printing

312
based on sensed properties
take certain individual incorrectly aimed elements out of service
(at least partially)

313 modify printmask to substitute different printing elements

314 set usage weight for substantially each individual element

315 calculate usage weight
from equation:

$$w(i) = 1000 \cdot \left[1.0 - \alpha\left(\frac{|prof(i) - avg|}{\max|prof(i_n) - avg|}\right)^{\beta}\right] \quad \alpha \subset [0.8,1]; \beta = 2,3$$

316 set weight to:
● range 0 through 500 if profile value
   is at/above *avg+threshold*; or to
● 1000 if profile value is
   below *avg+threshold*

321 later print an image using modified relative usage

322 print multipass